# EUROPÄISCHE PATENTANMELDUNG

(11) **EP 3 351 204 A1**
(43) Veröffentlichungstag der Anmeldung: **25.07.2018**
(21) Anmeldenummer: 17152819.3
(22) Anmeldetag: 24.01.2017
(51) Int. Cl.: A61C 13/00, B23Q 3/157

(54) **DENTALFRÄSMASCHINE**

(71) Anmelder: Huber, Martin, 5452 Pfarrwerfen (AT); Wörmer, Alfons, 5500 Bischofshofen (AT)
(72) Erfinder: HUBER, Martin, 5452 Pfarrwerfen (AT); WÖRMER, Alfons, 5500 Bischofshofen (AT)
(74) Vertreter: Baronetzky, Klaus

(57) **Zusammenfassung**

Eine Dentalfräsmaschine mit einem Werkstückhalter (2) und einem Wechselarm (10) ist dadurch gekennzeichnet, dass der Wechselarm (10) einen im Wesentlichen U-förmigen Greifaufsatz (12) aufweist und dass ein Werkzeug (14) der Dentalfräsmaschine (1) ein Werkzeug-Fixierelement (16) aufweist. Das Werkzeug-Fixierelement weist an zwei einander gegenüberliegenden und voneinander weg weisenden Stellen Nuten (18) oder Haltevorsprünge auf, die von dem U-förmigen Greifaufsatz (12) des Wechselarmes (10) übergreifbar sind, wobei Teile des U-förmigen Gefräsaufsatzes (12), insbesondere Seitenflanken (12a, 12b) des U-förmigen Greifaufsatzes (12) unter Vorspannung an den Nuten (18) oder Haltevorsprüngen des Werkzeug-Fixierelements (16) anliegen.

## Beschreibung

Die Erfindung betrifft eine Dentalfräsmaschine gemäß dem Oberbegriff von Anspruch 1.

Derartige Dentalfräsmaschinen mit Werkzeugwechsler sind seit langem bekannt. Ein Beispiel hierfür ist die aus der DD 233 791 A1 bekannte Lösung. Diese Lösung weist eine Kassette für die Aufnahme einer Mehrzahl von Werkzeugen auf, die über einen Greifarm transportiert werden kann. Nachteilig hierbei ist die Notwendigkeit, zusätzliche Maßnahmen zu ergreifen, um einzelne Werkzeuge handhaben zu können.

Aus der DE 100 39 525 A1 ist ebenfalls ein Werkzeugwechsler bekannt, bei dem ein zweiteiliger Greifer Werkzeuge aus Magazinpositionen entnehmen und an die gewünschte Stelle verbringen kann.

Diese Lösung hat sich ebenfalls nicht durchgesetzt. Der dortige Greifer erfordert eine präzise Steuerung und stellt ein zusätzliches und kostenaufwendiges Betätigungselement innerhalb der Werkzeugmaschine dar.

Ferner ist es bereits vorgeschlagen worden, an einem Wechselarm einer Werkzeugmaschine Gabeln zu verwenden, und über diese das Werkzeug einem Magazin zu entnehmen und an die gewünschte Stelle zu verbringen.

Bei dieser Lösung ist eine vergleichsweise langsame Bewegung des Wechselarms erforderlich, um die Werkzeuge an den gewünschten Ort zu verbringen. Versuche haben ergeben, dass auch Werkzeuge verloren gehen können, wenn die Verbringung zu rasch erfolgt.

Daher liegt der Erfindung die Aufgabe zugrunde, eine Dentalfräsmaschine, gemäß dem Oberbegriff von Anspruch 1 zu schaffen, die auch einen schnelleren Werkzeugwechsel ermöglicht, ohne dass zusätzliche Kosten erforderlich wären.

Diese Aufgabe wird erfindungsgemäß durch Anspruch 1 gelöst, vorteilhafte Weiterbildungen ergeben sich aus den Unteransprüchen.

Erfindungsgemäß besonders günstig ist es, dass der Wechselarm einen oder mehrere Greifaufsätze trägt, die im wesentlichen U-förmig sind. Die Greifaufsätze ermöglichen ein gezieltes Greifen der Werkzeuge an deren Werkzeug-Fixierelementen. Die Greifaufsätze liegen so an dem Fixierelement an, dass dieses unter Vorspannung festgehalten wird. Durch die Vorspannung ist überraschend auch eine sehr rasche Bewegung des Wechselarms möglich, ohne dass Werkzeuge verloren gehen können, was die Zuverlässigkeit der Dentalfräsmaschine wesentlich erhöht.

Die Fixierung kann in beliebiger geeigneter Weise erfolgen. Wesentlich ist ein Übergreifen. Der Greifaufsatz übergreift das Werkzeug an dessen Fixierelement bevorzugt um etwas mehr als 180 Grad. Zusammen mit der Vorspannung lässt sich die gewünschte Fixierung sicherstellen.

Trotz dieses Übergreifens ist ein zwangloses Einführen des Werkzeug-Fixierelements in den Greifaufsatz möglich. Hierzu fährt der Wechselarm seitlich - bezogen auf die Achse des Werkzeugs - an das Werkzeug heran, und zwar auf einer Höhe, dass sich der Greifaufsatz neben dem Fixierelement erstreckt und sich von der Seite an dieses annähert. Beim Übergreifen des Fixierelements werden die Seitenflanken des Greifaufsatzes gegebenenfalls leicht aufgespreizt oder liegen zumindest fest an dem Fixierelement an. Der Greifaufsatz kann auch in Rastnasen an den Enden der Seitenflanken enden, die dann das Fixierelement unverlierbar halten.

Das Fixierelement weist hierzu Nuten oder mindestens Haltevorsprünge auf. Die Nuten oder Haltevorsprünge erstrecken sich quer zur Achse des Werkzeugs und sind in ihrer Form an den Greifaufsatz, insbesondere dessen Seitenflanken, angepasst.

Bei kreissymetrischer Ausbildung der Nuten oder Haltevorsprünge ist ein Greifen des Werkzeugs am Fixierelement unabhängig von dessen Drehposition möglich. Dies stellt insofern eine vorteilhafte Ausgestaltung dar.

Bevorzugt ist der Wechselarm ein fünfachsig beweglicher Wechselarm, der auch das Werkstück einspannt und der Fräsbearbeitung zuführt. Die Werkzeugspindel ist demgegenüber bevorzugt raumfest, so dass insofern eine 5/0-Dentalfräsmaschine vorliegt.

Es versteht sich, dass hier unter Dentalfräsmaschine sämtliche Arten von dentalen spanabhebenden Bearbeitungsmaschinen zu verstehen sind, also beispielsweise auch Dentalschleifmaschinen, Dentaldrehschleifmaschinen, Dentalbohrmaschinen und dergleichen, wobei hier der Einfachheit halber von "Fräsen" gesprochen wird.

Besonders günstig ist es, wenn an dem Wechselarm zwei U-förmige Greifaufsätze, und zwar bevorzugt an der gleichen Seite, angebracht sind. Beide Greifaufsätze vermögen dann je ein Werkzeug an dessen Fixierelement aufzunehmen und sicher zu lagern.

Die Verwendung von zwei, einander benachbarten Greifaufsätzen ermöglicht es, die erforderlichen Bewegungen des Wechselarms zu reduzieren. Beispielsweise kann der Wechselarm, dann bei zunächst unbestückten Greifaufsätzen, für den Werkzeugwechsel aus einem Werkzeugmagazin ein Werkzeug entnehmen. Hierzu fährt er seitlich mit dem U-förmigen Greifaufsatz an das Werkzeug heran, und zwar so, dass Greifaufsatz und Fixierelement höhengleich sind.

Nach dem Einschnappen verbringt der Wechselarm dann das Werkzeug in die Nähe der Werkzeugspindel. Gegebenenfalls ist hierfür eine Drehung des Wechselarmes um 180 Grad erforderlich, je nach Anordnung der Werkzeugspindel relativ zum Werkzeugmagazin.

Der Wechselarm weist in dieser Position nun einen bestückten und einen unbestückten Greifaufsatz auf. In der Frässpindel ist in diesem Zustand ein Werkzeug eingespannt, das nun ersetzt werden soll. Hierzu fährt der Werkzeugarm seitlich mit dem unbestückten Greifaufsatz an die Frässpindel heran und zwar wiederum so, dass sich Fixierelement und Greifaufsatz höhengleich erstrecken.

Der Greifaufsatz schnappt auf das Fixierelement auf und entnimmt das Werkzeug der Werkzeugspindel, wobei es sich versteht, dass hierzu das Spannfutter der Frässpindel gelöst wird.

Erfindungsgemäß wesentlich ist stets ein seitliches Heranfahren des Wechselarms zum Einschnappen des Fixierelements in den Greifaufsatz, und, nachdem dies erfolgt ist, ein achsparalleles Wegbewegen von der je aktuellen Position des Werkzeugs, in Richtung des vorderen Endes des Werkzeugs. Dies gilt sowohl bei der Entnahme des Werkzeugs aus dem Werkzeugmagazin als auch bei der Entnahme aus der Werkzeugspindel.

Nachdem das auszutauschende Werkzeug entnommen ist, wird der Wechselarm mit dem anderen Greifaufsatz, also dem, der das neue Werkzeug trägt, bei geöffnetem Spannfutter vor dieses gebracht, also so, dass der Schaft des Werkzeugs sich vor dem Spannfutter der Frässpindel erstreckt und im wesentlichen koaxial zu diesem ist.

Das Werkzeug wird nun mit seinem Schaft in das Spannfutter hineinbewegt. Dieses wird geschlossen und nach insofern erfolgter Fixierung des Werkzeugs bewegt sich der Wechselarm seitlich, und zwar entgegen der Öffnungsrichtung des Us des Greifaufsatzes des nunmehr eingespannten Werkzeugs.

Hierdurch wird das Werkzeug aus dem betreffenden Greifaufsatz gelöst. Der Wechselarm bewegt sich nun von der Werkzeugspindel weg in Richtung Werkzeugmagazin, wobei er gegebenenfalls, je nach räumlicher Anordnung dieser beiden, gedreht oder in beliebigen Achsen verfahren wird.

Das verbrauchte oder auszutauschende Werkzeug wird nun vor eine leere Magazinposition gebracht.

In einer Ausführungsform weist das Werkzeug eine Ringnut auf und ist dafür bestimmt, in die Position des Werkzeugmagazins eingesteckt zu werden. Bei dieser Ausführungsform wird der Wechselarm vor diese leere Steckposition gehalten und der Schaft des Werkzeugs an dieser Position eingeführt und dort gegebenenfalls festgeklemmt. Für die Freigabe des Werkzeugs wird der Greifaufsatz wiederum seitlich entgegen der Öffnungsrichtung des U bewegt, so dass das Werkzeug sich an der betreffenden Steckposition im Magazin befindet.

Diese Ausführungsform eignet sich besonders für eine stehende Aufnahme der Werkzeuge in dem Werkzeugmagazin.

Eine andere Ausführungsform ist besonders für eine hängende Aufnahme der Werkzeuge im Werkzeugmagazin geeignet. Bei dieser Ausführungsform weist das Werkzeug-Fixierelement zwei Ringnuten oder jedenfalls zwei Ring-Haltevorsprünge auf, die in axialer Richtung des Werkzeugs betrachtet voneinander beabstandet sind.

Bei dieser Ausführungsform weist das Werkzeugmagazin in jeder Aufnahmeposition des Werkzeugs je einen U-förmigen Aufnahmeschlitz auf, der über eine Ringnut des Werkzeugs passt. Der Wechselarm wird für die Bestückung des Magazins so betätigt, dass der U-förmige Greifaufsatz an dem Wechselarm das Werkzeug auf einer Höhe führt, so dass die freie Ringnut des Werkzeugs und der U-förmige Aufnahmeschlitz des Werkzeugmagazins einander entsprechen.

Zudem weisen die beiden Us schräg zu einander, also nicht exakt in einer Erstreckung von 180 Grad zueinander, sondern in eine Erstreckungsrichtung von etwa 90 Grad zueinander.

Für die Überfühung des Werkzeugs von der Steckposition an dem Wechselarm zum Aufnahmeschlitz des Werkzeugmagazins wird nun der Wechselarm so bewegt, dass das Werkzeug mit seiner freien Ringnut in den Aufnahmeschlitz eingeführt wird. In dieser Position sind zunächst beide Ringnuten in Eingriff mit dem jeweiligen Aufnahmeschlitz bzw. dem Greifaufsatz. Der Wechselarm wird nun so betätigt, dass die Bewegung entgegen der offenen Seite des Greifaufsatzes erfolgt.

In dieser Richtung ist eine seitliche Bewegung des Werkzeugs in dem Aufnahmeschlitz nicht möglich, da die betreffende Seitenflanke des Aufnahmeschlitzes entgegenwirkt. Das Werkzeug löst sich daher aus dem Greifaufsatz, so dass nunmehr beide U-förmigen Greifaufsätze des Wechselarms frei sind und das Werkzeug in dem Werkzeugmagazin verbleibt. Es wird entweder als verbraucht entnommen oder steht für eine weitere bahnabhebende Bearbeitung bereit.

Bevorzugt weisen die Greifaufsätze je Federzungen auf, die von sich aus das Werkzeug an der betreffenden Ringnut eingespannt halten. Hierzu kann beispielsweise der Innendurchmesser des Greifaufsatzes um weniges, wie beispielsweise 0,3mm, kleiner als der Außendurchmesser der betreffenden Ringnut sein, und zwar in unbelasteten Zustand, so dass die Federzungen des Greifaufsatzes dann durch Einführung des Fixierelements um den betreffenden Betrag aufgespreizt werden und das Werkzeug sicher gehalten wird.

Auch wenn die Realisierung der Aufnahme des Greifaufsatzes an dem Fixierelement über Ringnuten bevorzugt ist, versteht es sich, dass anstelledessen auch beliebige andere Kavitäten, beispielsweise Ringkavitäten zum Einsatz gelangen können. Wichtig ist lediglich die Möglichkeit der seitlichen Annäherung des Greifaufsatzes für das Übergreifen des Fixierelements und die Sicherheit der Fixierung des Fixierelements des Greifaufsatzes. Die axial voneinander beabstandeten Ringnuten müssen nicht exakt die gleiche Form aufweisen. Es ist jedoch bevorzugt, dass sie von den Greifaufsätzen gleichermaßen übergreifbar sind und der Eingriff das Werkzeug in dem Greifaufsatz fixierbar ist.

Gemäß einer weiteren bevorzugten Weiterbildung ist vorgesehen, dass eine Frässpindel in dem Fräsraum vorgesehen ist, die ortsfest angeordnet ist und ein Werkzeug-Spannfutter trägt, das in an sich bekannter Weise ein Fräswerkzeug eingespannt führt, welche Frässpindel insbesondere an der Bodenwand des Fräsraums befestigt ist. Aufgrund der Befestigung der Frässpindel an der Bodenwand des Fräsraums kann das Fräswerkzeug relativ zur Frässpindel im Fräsraum exakt positioniert werden, um einen gewünschten Materialabtrag des Werkstücks zu ermöglichen.

Weitere Vorteile, Einzelheiten und Merkmale lassen sich der nachfolgenden Beschreibung mehrerer Ausführungsbeispiele der Erfindung anhand der beigefügten Zeichnungen entnehmen.

Es zeigen:
- Fig. 1: eine schematische Darstellung einer Dentalfräsmaschine in einer Ausführungsform der Erfindung;
- Fig. 2: eine vergrößerte Darstellung eines Details aus Fig. 1;
- Fig. 3: eine weitere vergrößerte Darstellung entsprechend Fig. 2;
- Fig. 4: eine Darstellung einer anderen Ausführungsform einer erfindungsgemäßen Dentalfräsmaschine;
- Fig. 5: eine weitere Darstellung eines Details der Ausführungsform gemäß Fig. 4.

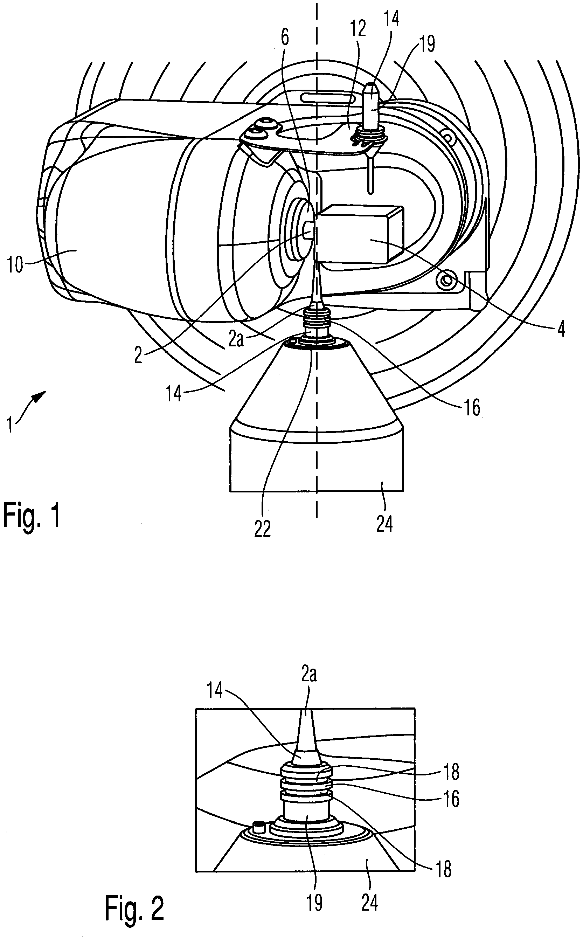

Bei der Ausführungsform gemäß Fig. 1 ist ein Teil einer Dentalfräsmaschine 1 zu ersehen. Die Dentalfräsmaschine 1 ist dafür bestimmt, ein Werkstück 4 spanabhebend zu bearbeiten.

Das Werkstück 4 weist hierfür einen Werkstückhalter 2 auf, der in einem Spannfutter 6 eines Wechselarms 10 der Dentalfräsmaschine 1 eingespannt gehalten ist. Der Wechselarm 10 ist in den dargestellten Ausführungsbeispielen in fünf Raumrichtungen beweglich, nämlich in drei translatorischen und zwei rotatorischen Raumrichtungen.

Er trägt seitlich, also außerhalb der Achse des Spannfutters 6 und des Werkstücks 4, einen U-förmigen Greifaufsatz 12.

Der U-förmige Greifaufsatz 12 ist dafür bestimmt, ein Werkzeug 14 aufzunehmen und zu fixieren. Hierzu weist das Werkzeug 14 ein Werkzeug-Fixierelement 16 auf, dessen Einzelheiten weiter unten beschrieben sind.

Das Werkzeug-Fixierelement 16 weist zwei einander benachbarte Ringnuten 18 auf. Diese sind kreisringförmig ausgebildet und koaxial zum Werkzeug 14 und zudem in axialer Richtung betrachtet voneinander beabstandet.

Das Werkzeug 14 weist zudem einen Schaft 19 auf. Dieser ist dafür bestimmt, in einem Spannfutter 22 einer ortsfesten Werkzeugspindel 24 eingespannt gehalten zu werden.

Das Werkzeug-Fixierelement 16 erstreckt sich zwischen einem axialen Endabschnitt 2a (vgl. Fig. 2), der für die sparnabhebende Bearbeitung durch das Werkzeug bestimmt ist, und dem Schaft 19 des Werkzeugs 14.

Aus Fig. 1 ist ein Werkzeug 14 ersichtlich, das in dem Spannfutter 22 der Spindel 24 eingespannt gehalten ist, und ein weiteres Werkzeug, das an dem U-förmigen Greifaufsatz 12 befestigt ist. Die Ausrichtung dieser beiden Werkzeuge 14 ist zueinander entgegengesetzt.

Wenn das Werkzeug 14 aus der Spindel 24 entnommen werden soll, muss das in dem Greifaufsatz 12 befindliche Werkzeug 14 zunächst in ein Werkzeugmagazin verbracht werden, so dass der Greifaufsatz 12 frei vom Werkzeug ist.

Wenn dies erfolgt ist, kann der Wechselarm 10 dann zunächst um 180 Grad um die so genannte B-Achse, also die Drehachse des Spannfutters 6, gedreht werden.

Der Greifaufsatz 12 erstreckt sich dann seitlich neben dem Werkzeug-Fixierelement 16 des Werkzeugs 14, das in der Spindel eingespannt ist.

Die Ausrichtung erfolgt so, dass das U sich genau auf der Höhe des oberen Ringes 18 des Fixierelements erstreckt.

Durch Seitwärtsbewegung wird dann der Greifaufsatz auf diese Ringnut 18 aufgeschoben. Das Spannfutter 22 wird gelöst und der Wechselarm 10 nach oben bewegt, so dass die Spindel 24 ohne Werkzeug ist.

Der Wechselarm 10 wird dann wiederum in die Position gemäß Fig. 1 gedreht und das nunmehr dort befindliche Werkzeug aus der Spindel 24 in eine freie Aufnahmeposition des Werkstückmagazins eingeschoben, und zwar mit der anderen Ringnut 18, die nunmehr oben zu liegen gekommen ist, nachdem der Wechselarm 10 um 180 Grad gedreht worden ist.

Aus Fig. 2 ist der axiale Abstand beider Ringnuten 18 und die Anordnung im einzelnen ersichtlich.

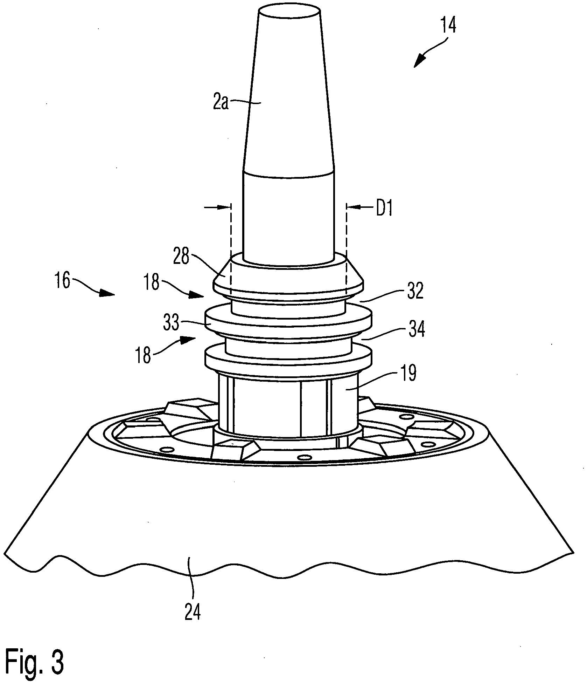

Eine vergrößerte Darstellung des in die Spindel 24 eingespannten Werkzeugs 14 ist aus Fig. 3 ersichtlich. Das Fixierelement 16 beginnt - von dem axialen Endabschnitt 2a ausgehend betrachtet - mit einer Fase 28. An diese schließt sich die mehrfache Anordnung der Ringnuten 18 an. In der Ausführungsform gemäß Fig. 3 ist eine Ringkavität 32 vorgesehen. In axialer Richtung hieran schließt sich ein Ringsteg 33 an, und dann als zweite Ringnut 18 eine zweite Ringkavität 34. Anschließend hieran ist der Schaft 19 des Werkzeugs ausgebildet.

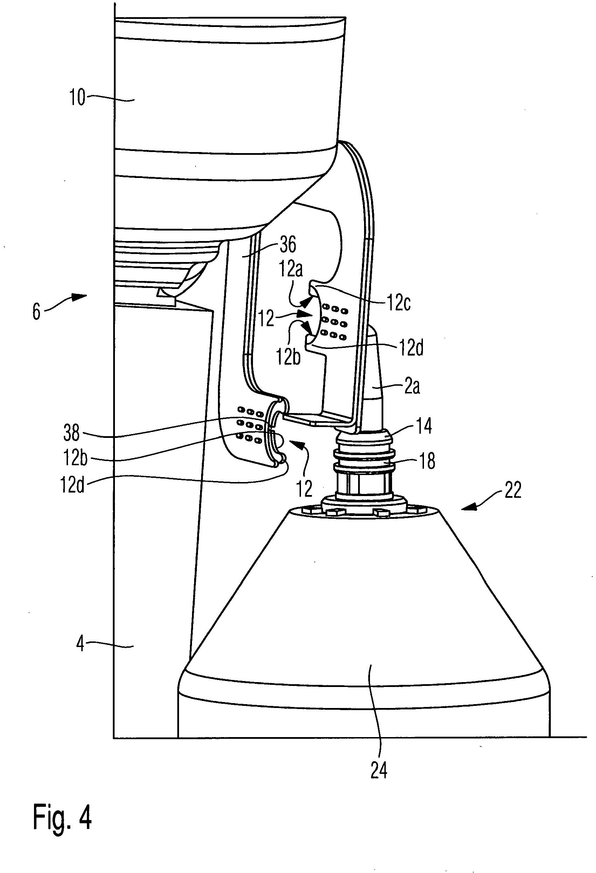

Eine weitere Ausführungsform einer erfindungsgemäßen Dentalfräsmaschine ist aus Fig. 4 ersichtlich.

Bei dieser Ausführungsform sind zwei Greifaufsätze 12 ausgebildet, und zwar an einem gemeinsamen Blech 36, das an dem Wechselarm 10 angebracht ist. Jeder Greifaufsatz weist Federzungen 12c und 12d auf, die Teil des U sind. Die Federzunge 12c weist eine Seitenflanke 12a auf, und die Federzunge 12d eine Seitenflanke 12b. Die Seitenflanken 12a und 12b weisen aufeinander zu.

Wie aus Fig. 4 ersichtlich ist, ist der Mittelschenkel des U je ausgerundet, in Anpassung an die Form der Ringnuten 18.

Zusätzlich ist je ein Mittelschlitz 38 ausgebildet, der die Federelastizität der Federzungen 12c und 12d verbessert.

Es versteht sich, dass die genaue Ausgestaltung in beliebiger Weise an die Erfordernisse anpassbar ist. Wesentlich ist jedoch die Möglichkeit der Fixierung der Ringnuten 18 des Werkzeug-Fixierelements 16 in den Greifaufsätzen 12. Bei Bedarf können an den endseitigen Seitenflanken 12a und 12b auch kleine einwärts weisende Vorsprünge vorgesehen sein, die die Einspannung gegebenenfalls noch verbessern und auch ein Einschnappen ermöglichen.

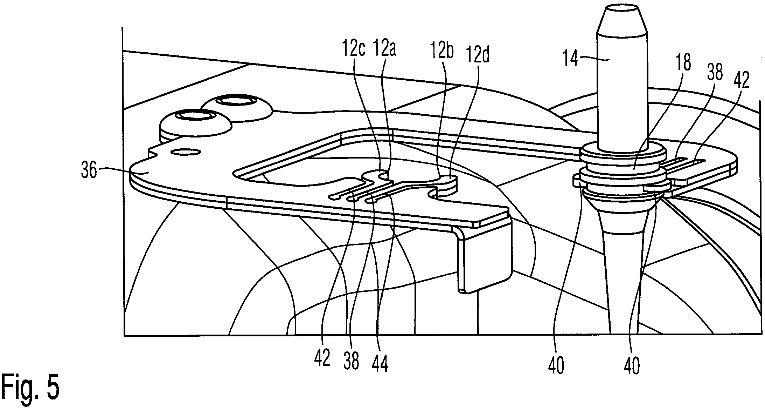

Dies ist aus Fig. 5 ersichtlich, welche Figur die einwärts weisenden Vorsprünge 40 zeigt.

Durch diese Vorsprünge ist der Umschlingungswinkel des Greifaufsatzes 12 je etwas größer als 180 Grad.

Aus Fig. 5 ist auch der Mittelschlitz 38 ersichtlich. Zur Verbesserung der Federeigenschaften der Federzungen 12c und 12d sind zudem zusätzliche Schlitze 42 und 44 seitlich des Mittelschlitzes vorgesehen.

Wie aus Fig. 5 ersichtlich ist, ist das Blech 36 teilweise aufgedoppelt. Dies erhöht die Steifigkeit in Richtung der Achse des Werkzeugs 14, ermöglicht aber dennoch die erwünschten Federeigenschaften, wobei im Bereich der Federzungen 12a und 12b auf das Aufdoppeln verzichtet wird.

## Patentansprüche

1. Dentalfräsmaschine, mit einem Werkstückhalter (2) und einem Wechselarm (10), **dadurch gekennzeichnet, dass** der Wechselarm (10) einen im Wesentlichen U-förmigen Greifaufsatz (12) aufweist und dass ein Werkzeug (14) der Dentalfräsmaschine (1) ein Werkzeug-Fixierelement (16) aufweist, das an zwei einander gegenüberliegenden und voneinander weg weisenden Stellen Nuten (18) oder Haltevorsprünge aufweist, die von dem U-förmigen Greifaufsatz (12) des Wechselarmes (10) übergreifbar sind, wobei Teile des U-förmigen Greifaufsatzes (12), insbesondere Seitenflanken (12a, 12b) des U-förmigen Greifaufsatzes (12), unter Vorspannung an den Nuten (18) oder Haltevorsprüngen des Werkzeug-Fixierelements (16) anliegen oder dass das Werkzeug-Fixierelement (16) in dem U-förmigen Greifaufsatz (12) eingespannt gehalten ist.

2. Dentalfräsmaschine nach Anspruch 1, **dadurch gekennzeichnet, dass** der Wechselarm (10) zwei einander benachbarte und voneinander beabstandete U-förmige Greifaufsätze (12) trägt, wobei sich insbesondere die Us auf dergleichen Ebene erstrecken.

3. Dentalfräsmaschine nach Anspruch 2, **dadurch gekennzeichnet, dass** die U-förmigen Greifaufsätze (12) offene Seiten der Us aufweisen, die einander entgegengesetzt gerichtet sind, wobei insbesondere die Us mit ihren offenen Seiten aufeinander zu weisen, jedoch gegeneinander versetzt sind.

4. Dentalfräsmaschine nach Anspruch 1, 2 oder 3, **dadurch gekennzeichnet, dass** die Nuten (18) oder Haltevorsprünge an einem Ring des Werkzeug-Fixierelements (16) angebracht sind, welches an dem Werkzeug (14) befestigt ist, und dass die Nuten (18) insbesondere kreisförmig ausgebildet sind.

5. Dentalfräsmaschine nach Anspruch 3 oder 4, **dadurch gekennzeichnet, dass** der Wechselarm (40) erste Federzungen (12c, 12d) aufweist, und dass die ersten Federzungen (12c, 12d) an einem Ende federnd und an dem anderen Ende gelagert sind, und dass die ersten Federzungen (12c, 12d) bei Annäherung des Wechselarms (10) der Dentalfräsmaschine (1) an ein in ein Spannfutter (22) oder eine Spannzange einer Werkzeugspindel (24) der Dentalfräsmaschine eingespannten Werkzeug das Werkzeug (14) durch Druck auf die ersten Federzungen (12c, 12d) fixieren.

6. Dentalfräsmaschine nach einem der Ansprüche 3 bis 5, **dadurch gekennzeichnet, dass** die Spannzange oder das Spannfutter (22) der Werkzeugspindel (24) einen Schaft (19) des Werkzeugs (14) greift und hält

7. Dentalfräsmaschine nach einem der vorhergehenden Ansprüche, **dadurch gekennzeichnet, dass** das Werkzeug-Fixierelement (16) nach der Art einer Kreishülse und das Werkzeug (14) im Wesentlichen stiftförmig ausgebildet ist, wobei ein maximaler Außendurchmesser (D1) der Ringnut (18) des im Querschnitt im Wesentlichen kreisförmigen Werkzeug-Fixierelements (16) höchstens um 0,5mm größer als ein Innendurchmesser (D2) der ersten Federzungen (12c,12d) in unbelastetem Zustand ist, und wobei das Werkzeug-Fixierelement (16) eine Ringnut (18) erste Ringkavität (32) aufweist, die für das Greifen der Spannzabge oder des Spannfutters des Wechselarms (10) bestimmt ist.

8. Dentalfräsmaschine nach einem der vorhergehenden Ansprüche, **dadurch gekennzeichnet, dass** das Werkzeug (14) eine zweite Ringnut (18) zweite Ringkavität (34) aufweist, die von einem axialen Endabschnitt (2a) des Werkzeugs beabstandet angeordnet ist.

9. Dentalfräsmaschine nach einem der vorhergehenden Ansprüche, **dadurch gekennzeichnet, dass** der Wechselarm (10) ein Blech (36) trägt, an dessen Ende der U-förmige Greifaufsatz (12) ausgebildet ist, wobei die Seitenflanken (12a, 12b) des U-förmige Greifaufsatzes (12) zwei Federzungen (12c, 12d) aufweisen, die von einander beabstandet sind.

10. Dentalfräsmaschine nach Anspruch 9, **dadurch gekennzeichnet, dass** die zwei Federzungen in die Ringkavitäten (32,34) passen und diese im Wesentlichen U-förmig ausfüllen.

11. Dentalfräsmaschine nach Anspruch 9 oder 10, **dadurch gekennzeichnet, dass** die Federzungen (12c, 12d) eine Länge aufweisen, die größer als der Radius der Ringkavitäten (32, 34) ist und die Ringkavitäten (32,34) teilweise umgreifen.

12. Dentalfräsmaschine nach einem der Ansprüche 8 bis 11, **dadurch gekennzeichnet, dass** der U-förmige Greifaufsatz (12) Federzungen (12c, 12d) aufweist, deren Breite deutlich geringer und deren Elastizität deutlich höher als diejenigen eines Federblechs (36) sind, welche Federzungen (12c, 12d) voneinander beabstandet sind.

13. Dentalfräsmaschine nach einem der vorhergehenden Ansprüche, **dadurch gekennzeichnet, dass** der Wechselarm (10) in einer Bewegungsrichtung von im Wesentlichen 90 Grad zur Längserstreckung des Werkzeugs (14) verfahrbar ist und das Werkzeug über seine Federzungen in die Nuten (18) greift und aus dem Spannfutter (22) entnimmt und einem Werkzeugmagazin zuleitet, an welchem ein weiteres, entsprechend ausgestattetes Werkzeug von dem Wechselarm (10) aufnehmbar ist.
